# EUROPÄISCHE PATENTANMELDUNG

(11) **EP 3 366 752 A1**
(43) Veröffentlichungstag der Anmeldung: **29.08.2018**
(21) Anmeldenummer: 17400011.7
(22) Anmeldetag: 28.02.2017
(51) Int. Cl.: C10J 3/00, C10J 3/08

(54) **VERFAHREN ZUM HERSTELLEN VON SYNTHESEGAS DURCH VERGASEN FESTER KOHLENSTOFFTRÄGER**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Müller-Hagedorn, Matthias, 76199 Karlsruhe (DE); Covella, Karsten, 61130 Nidderau (DE); Bauer, Ingo, 61118 Bad Vilbel (DE)
(74) Vertreter: Dropsch, Holger

(57) **Zusammenfassung**

Verfahren zum Herstellen von Synthesegas durch Vergasen eines Kohlenstoffträgers in einem Slurry, der einen signifikanten Gehatt an Phosphor aufweist. Erfindungsgemäß werden dabei die in der flüssigen Phase der Suspension gelösten Phosphorverbindungen durch Behandeln der Suspension durch Erhöhen des pH-Wertes der Suspension und/oder Erhöhen der Konzentration an Metallkationen in der Suspension mindestens teilweise ausgefällt, bevor die Suspension weiter aufgeheizt und nachfolgend dem Vergasungsreaktor aufgegeben wird.

## Beschreibung

### Gebiet der Erfindung

Die Erfindung betrifft ein Verfahren zum Herstellen von Synthesegas durch Vergasen eines Kohlenstoffträgers, der einen signifikanten Gehalt an Phosphor aufweist. Insbesondere liegt bei dem erfindungsgemäßen Verfahren der phosphorhaltige Kohlenstoffträger in fester Form als feinteiliges Pulver vor, das in einem Lösungs- bzw. Dispersionsmittel, beispielsweise Wasser, wasserhaltiges Pyrolysekondensat oder wasserhaltiges Pyrolyseöl, aufgeschlämmt bzw, suspendiert ist (sog. Slurry) und in dieser Form dem Vergasungsreaktor zugeführt wird. Alternativ oder zusätzlich kann auch das Dispersionsmittel einen signifikanten Gehalt an Phosphor aufweisen.

### Stand der Technik

Bei partiellen Oxidationsprozessen wird ein kohlenstoffhaltiger Einsatzstoff, der Kohlenstoffträger, mit einem sauerstoffhaltigen Oxidationsmittel in einem Reaktionsgefäß bei hohen Temperaturen umgesetzt, um so ein Synthesegas zu erzeugen, das Wasserstoff (H₂) und Kohlenmonoxid (CO) enthält. Wenn der kohlenstoffhaltige Einsatzstoff in fester Form, beispielsweise als Kohle oder feste Biomasse, oder flüssiger Form, beispielsweise als Schweröl, vorliegt, spricht man üblicherweise von einem Vergasungsverfahren, im Gegensatz zur Reformierung gasförmiger Kohlenstoffträger wie Erdgas. Das Reaktionsgefäß wird dann als Vergasungsreaktor bezeichnet.

In dem Fachbuch "Gasification", C. Higman und M. van der Burgt, Gulf Professional Publishing, Elsevier Science (USA) (2003) werden in Kapitel 5.3 verschiedene Vergasungsverfahren zum Erzeugen von Synthesegas durch Vergasen fester oder flüssiger Kohlenstoffträger beschrieben. Wenn der Kohlenstoffträger als Pulver oder staubförmig vorliegt, spricht man auch von Entrained-Flow-Vergasungsverfahren (ETF).

Einige der beschriebenen Vergasungsverfahren, beispielsweise das Texaco-Verfahren oder das Lurgi-MPG^{™}-Verfahren (Multi Purpose Gasification), können auch Aufschlämmungen fester Kohlenstoffträger in Wasser als Dispersionsmittel als Einsatzstoff in den jeweiligen Vergasungsreaktor verarbeiten. Dabei wird aus dem feinteiligen Kohlenstoffträger mit Wasser eine Aufschlämmung (sog. Slurry) gebildet, mittels geeigneter Pumpen dem Vergasungsreaktor zugeführt und diesem über einen oder mehrere an der Oberseite des Vergasungsreaktors angeordnete Brenner gemeinsam mit dem Vergasungsmittel Sauerstoff im Gleichstrom aufgegeben. Vorteilhaft ist es dabei, dass das als Dispersionsmittel verwendete Wasser gleichzeitig auch als Vergasungsmittel bzw. Moderator dient.

Der Vergasungsreaktor besteht bei den genannten Verfahren im oberen Teil aus einer feuerfest ausgekleideten Reaktionskammer, in dem die Umsetzung des Kohlenstoffträgers mit dem Vergasungsmittel zu einem Rohsynthesegas erfolgt. An die Reaktionskammer schließt sich im unteren Teil in Strömungsrichtung eine Abkühlzone an, in der das Gasprodukt beispielsweise durch Hindurchleiten durch eine Wassertauchung und/oder durch Eindüsen von Wasser (sog. Quench) schlagartig abgekühlt wird. Ferner erfolgt durch die Wasserbeaufschlagung eine Abtrennung nicht umgesetzten Kohlenstoffträgers sowie von Asche- bzw. Schlackepartikeln.

Im Fall von Kohlenstoffträgern, die z. B. Metalle als Aschebildner bzw. Schlackebildner enthalten, wird dabei die Asche häufig im Reaktionsgefäß aufgeschmolzen und verlässt gemeinsam mit der entstehenden Gasphase als Schlacke den Reaktor. Als Schlacke wird in der Feuerungstechnik üblicherweise die Asche bezeichnet, wenn sie über ihren Erweichungspunkt erhitzt wurde, so dass sie nicht mehr in feinkörnigem oder pulvrigem Zustand vorliegt, sondern teigig oder (zäh-)flüssig wird.

In der nachfolgenden Gaskühlung werden diese Ströme abgekühlt, so dass die Schlacke erstarrt und über Schleusensysteme ausgetragen werden kann. Derartige Verfahren und Vorrichtungen werden z. B. in der DE-Offenlegungsschrift DE 102007050895 A1 beschrieben. Wichtig ist hierbei, dass eine weitgehend flüssige Schlacke erzeugt wird, die gemeinsam mit der Gasphase den Reaktorraum verlassen kann. In einer speziellen Ausgestaltung wird dabei ein fester, Kohlenstoff und Aschebildner enthaltender Einsatzstoff mit einer Flüssigkeit zu einem Slurry angemischt, der pumpfähig ist und so über einen Einsatzstoffinjektor (Brenner) dem Reaktionsraum zugeführt werden kann. In der DE-Offenlegungsschrift DE 10 2005049375 A1 ist solch ein Verfahren beschrieben. Dabei ist es energetisch vorteilhaft, wenn die Schlacke schon bei möglichst niedrigen Temperaturen fließfähig ist. Dazu können dem Einsatzstoff schon stromaufwärts des Brenners Mineralien zugegeben werden, die die Schmelztemperatur der Asche bzw. Schlacke herabsetzen. Bei einem anderen bekannten Verfahren, beschrieben in der US-Patentschrift US 8771550 B2, werden diese Mineralien direkt dem Reaktionsraum zugegeben.

Insbesondere Biomasse-Slurries, die wie in der DE-Offenlegungsschrift DE 102005049375 A1 beschrieben oder durch ein ähnliches Verfahren hergestellt wurden, enthalten signifikante Mengen an K, Ca, Mg, Al, Si und P als Aschebildner (vgl. B. M. Jenkins et al., Fuel Processing Technology 54, 1998, 17-46). Bei der Slurry-Herstellung geht dabei ein Teil dieser anorganischen Verbindungen in Lösung. Dieses Ausmaß hängt unter anderem vom pH-Wert und der Temperatur des Slurries ab. Häufig weisen diese Biomasse-Slurries einen pH-Wert im sauren Bereich auf, so dass ein Teil der Phosphate als Hydrogenphosphat oder Dihydrogenphosphat vorliegt. Die schwerlöslichen Salze der Phosphorsäure mit dem Kation Ca²⁺ sind bei diesen Bedingungen teilweise in Lösung und zeigen eine abnehmende Löslichkeit mit der Temperatur auf. Bei Erwärmung eines solchen Slurries ist beobachtet worden, dass Ausscheidungen von Calciumphosphaten, z. B. Ca₃(PO₄)₂, insbesondere im Temperaturbereich von 60 bis 180 °C auftreten, die zu Blockierungen von Rohrleitungen oder Brennerdüsen führen können, was zu Stillständen der Vergasungsanlage und zu zusätzlichem Wartungsaufwand führt.

### Beschreibung der Erfindung

Vor diesem Hintergrund besteht die Aufgabe der vorliegenden Erfindung darin, ein Verfahren für die Herstellung von Synthesegas durch Vergasung von als Slurry vorliegenden, feststoffhaltigen Kohlenstoffträgern anzugeben, das die oben erörterten Nachteile nicht aufweist, bei dem also insbesondere das Auftreten von Blockierungen von Rohrleitungen oder Brennerdüsen in der Vergasungsanlage sicher verhindert wird, wenn feste Kohlenstoffträger vergast werden, die einen signifikanten Gehalt an Phosphor aufweisen, oder wenn alternativ oder zusätzlich das Dispersionsmittel einen signifikanten Gehalt an Phosphor aufweist.

Diese Aufgabe wird im Wesentlichen durch ein erfindungsgemäßes Verfahren mit den Merkmalen des Anspruchs 1 gelöst:

### Erfindunosgemäßes Verfahren:

Verfahren zum Herstellen eines Wasserstoff und Kohlenoxide enthaltenden Synthesegases durch Vergasen eines Phosphor und Aschebildner enthaltenden Kohlenstoffträgers, insbesondere fester, phosphorhaltiger Biomasse, umfassend folgende Verfahrensschritte:
(a) Bereitstellen einer Suspension (Slurry), umfassend kohlenstoffhaltigen Feststoff in fein verteilter Form und ein flüssiges Dispersionsmittel,
(b) Behandeln der Suspension durch Erhöhen des pH-Wertes der Suspension und/oder Erhöhen der Konzentration an Metallkationen in der Suspension,
(c) Zuführen der behandelten Suspension zu einem Vergasungsreaktor und Umsetzen der behandelten Suspension im Vergasungsreaktor unter Vergasungsbedingungen mit mindestens einem Vergasungsmittel zu einem Wasserstoff und Kohlenoxide enthaltenden Synthesegas,
(d) Ausleiten des Synthesegases aus dem Vergasungsreaktor und optional Zuführen des Synthesegases zu weiteren Konditionierungs- und/oder Umsetzungsschritten,
(e) Ausleiten einer festen oder flüssigen Schlacke aus dem Vergasungsreaktor.

Weitere vorteilhafte Ausgestaltungen des erfindungsgemäßen Verfahrens finden sich in den Unteransprüchen.

Unter Vergasungsbedingungen werden physikalisch-chemische Bedingungen verstanden, die eine mindestens teilweise, bevorzugt eine weitgehend vollständige Umsetzung des im Slurry suspendierten Kohlenstoffträgers mit Vergasungsmitteln wie Sauerstoff, Luft und/oder Wasserdampf zu Synthesegasbestandteilen gestatten. Sie sind aus dem Stand der Technik an sich bekannt um umfassen neben dem Zuführen des bzw. der Vergasungsmittel auch die Einstellung hoher Temperaturen. Oftmals wird die Vergasungsreaktion bei Drücken oberhalb von Atmosphärendruck durchgeführt. Die genauen Vergasungsbedingungen wird der Fachmann in Abhängigkeit von dem umzusetzenden Kohlenstoffträgers geeignet auswählen.

Als Kohlenstoffträger werden alle Stoffe oder Stoffgemische verstanden, die Kohlenstoff in unter Vergasungsbedingungen zu Synthesegasbestandteilen umsetzbarer Form enthalten. Als Beispiele können hier Steinkohle, Braunkohle, Biomasse sowie kohlenstoffhaltige Abfälle oder Nebenprodukte, z. B. Raffinerierückstände oder Pyrolyseöle, genannt werden.

Mit dem Begriff Biomasse wird die Stoffmasse von Lebewesen oder deren Teile bzw. Körperteile bezeichnet. Im weiteren Sinne wird darunter auch fossile Biomasse wie beispielsweise Kohle, Erdöl oder Erdgas verstanden.

Der Erfindung liegt die Erkenntnis zugrunde, dass es vorteilhaft ist, die im Dispersionsmittel gelösten Phosphate im Slurry soweit auszufällen, dass bei einer zeitlich nachfolgenden bzw. stromabwärts angeordneten, prozessbedingten Temperaturerhöhung keine weitere Ausscheidung an Feststoffen mehr auftritt. Eine solche prozessbedingte Temperaturerhöhung kann durch die Vorwärmung des Slurries in einen Wärmetauscher auftreten, um diesen auf die vorbestimmte Eintrittstemperatur in den Vergasungsreaktor zu bringen oder seine Viskosität zu erniedrigen. Um einen hohen Wärmeübergang zu schaffen, werden die in dem Wärmetauscher verwendeten Leitungsquerschnitte möglichst klein dimensioniert. Hierdurch verschärft sich das Problem der Verstopfung durch Ausscheidung fester Phosphate.

Prozessbedingte Temperaturerhöhungen können auch an anderen Bauteilen der Vergasungsanlage auftreten, die aufgrund ihrer geringen Abmessungen nicht mit einer ausreichenden Wärmeisolierung ausgestattet werden können und deren Leitungsquerschnitte gleichzeitig klein sind. Als Beispiel kann hier die Wärmeübertragung aus der Reaktionskammer des Vergasungsreaktors auf die Brennerdüse(n) genannt werden, die somit ebenfalls zur Verstopfung neigen.

Die erfindungsgemäße, kontrollierte Ausfällung der Phosphate ist auf verschiedene, nachfolgend erörterte Weisen möglich. Welche Methode angewendet wird, hängt auch von der Zusammensetzung des Slurries ab, insbesondere ob er als flüssige Phase auf wässriger oder organischer Basis hergestellt wurde.

Die kontrollierte Ausfällung von schwerlöslichen Phosphaten aus dem Slurry und ihr Verbleib in letzterem gefährdet seine Verwendung als Einsatzstoff für den Vergasungsreaktor nicht, da der dadurch zusätzlich erzeugte Feststoffgehalt gering gegenüber dem Gesamtfeststoffgehalt im Slurry ist und die wesentlichen rheologischen und sonstigen Eigenschaften des Slurries nur sehr gering ändert.

Eine Möglichkeit zur Durchführung des erfindungsgemäßen Verfahrens besteht in der Anhebung des pH-Wertes auf ein ausreichend basisches Niveau, so dass das Phosphat in Lösung weitgehend als ortho-Phosphat vorliegt und mit den in Lösung ausreichend vorhandenen Kationen schwerlösliche Verbindungen, beispielsweise Ca- , Mg-, Al-Phosphate, bildet. Zur Erhöhung des pH-Wert kommen Laugen oder auch basische Salze, wie z. B. Na₂CO₃ in Frage. Dabei ist es von Vorteil, wenn das verwendete basische Salz ein Anion aufweist, das nicht prozessfremd ist, sondern bei der Vergasung möglichst ebenfalls zu Synthesegasbestandteilen umgesetzt wird. Dies ist bei z. B. Na₂CO₃ der Fall, da das Carbonat im Vergasungsreaktor zu Kohlenoxiden umgesetzt wird.

Eine andere Möglichkeit zur Ausfällung der gelösten Phosphationen ist die starke Erhöhung von Kationen in der Lösung, die das weitgehende Ausfällen der Phosphationen als -schwerlösliche Phosphate bedingen. Mögliche Verbindungen wären hierbei z. B. Metallkationen wie Ca-, AI- oder Fe-Salze. Als preisgünstige Zuschlagstoffe kommen demnach gebrannter Kalk oder Abfälle aus der Eisen- oder Aluminiumindustrie (wie z. B. Rotschlamm) in Betracht. Zur Auswahl geeigneter Salze bzw. Anionen ist das oben Gesagte zu beachten, nachdem prozessfremde Anionen möglichst vermieden werden sollten.

Gegebenenfalls können oder müssen diese beiden Möglichkeiten auch kombiniert werden. Bei der Wahl dieser Zuschlagstoffe ist auch zu beachten, dass der Schmelzpunkt der Asche bzw. Schlacke durch ihre Zugabe nicht oder nur in die gewünschte Richtung verändert wird. Soll die Schlacke beispielsweise bei einer Flugstromvergasung flüssig aus dem Reaktionsgefäß abgezogen werden, sind insbesondere solche Zuschlagstoffe geeignet, die den Schmelzpunkt der Asche erniedrigen. Dies wären beispielsweise Na₂CO₃ zur pH-Wert Erhöhung oder Fe-Salze zum Ausfällen von schwerlöslichen Fe-Phosphaten. Bei einem trockenen Asche- bzw. Schlackeabzug kommen dagegen Fall eher Ca- und Al-Salze in Betracht.

### Bevorzugte Ausgestaltungen der Erfindung

Eine bevorzugte Ausgestaltung des erfindungsgemäßen Verfahrens ist dadurch gekennzeichnet, dass in Verfahrensschritt (c) der pH-Wert auf Werte von mindestens 7, bevorzugt mindestens 9, meist bevorzugt mindestens 10 erhöht wird. Grundsätzlich erfolgt die Abscheidung der Phosphate beispielsweise als schwerlösliche Calciumphosphate umso leichter, je höher der pH-Wert ist.

Als besonders vorteilhaft hat es sich herausgestellt, wenn in Verfahrensschritt (c) die Konzentration an Metallkationen in der Suspension dadurch erhöht wird, dass in dem Dispersionsmittel mindestens teilweise lösliche Salze zugegeben werden, die mindestens ein Kation, ausgewählt aus der Gruppe umfassend Ca, Al. Fe, enthalten. Alle diese Metallkationen bilden schwerlösliche Phosphate. Gegebenenfalls kann die Löslichkeit des jeweiligen Phosphats durch zusätzliche pH-Wert-Einstellung weiter minimiert werden.

In bevorzugter Weise erfolgt die erfindungsgemäße Behandlung des Slurries in Verfahrensschritt (c) bei Raumtemperatur oder bei der Herstellungs- oder Lagertemperatur des Slurries. Bevorzugt erfolgt sie, bevor die Temperatur des Slurries weiter erhöht wird, beispielsweise vor Zugabe des Slurries zum Vergasungsreaktor.

Besonders bevorzugt ist es, wenn ein wasserhaltiges Dispersionsmittel verwendet wird, beispielsweise Wasser, wasserhaltiges Pyrolysekondensat oder wasserhaltiges Pyrolyseöl. Der Wasseranteil erleichtert die Herstellung des Slurries und die Ausfällung des Phosphoranteils in unlöslicher Form und kann ferner als Moderator bzw. Vergasungsmittel im Vergasungsreaktor dienen.

Als besonders vorteilhaft hat es sich erwiesen, wenn bei dem erfindungsgemäßen Verfahren die behandelte Suspension vor dem Zuführen zum Vergasungsreaktor auf eine Temperatur von mindestens 20 °C, bevorzugt mindestens 60 °C, meist bevorzugt mindestens 120 °C vorgewärmt wird. Da die Vergasung zumeist bei Drücken deutlich oberhalb des Atmosphärendrucks durchgeführt wird, wird die Verdampfung von z. B. Wasser aus dem Slurry bei den genannten Temperaturen weitegehend vermieden und gleichzeitig die Löslichkeit der Phosphate vermindert.

In besonderer Ausgestaltung des erfindungsgemäßen Verfahrens wird in Verfahrensschritt (c) der pH-Wert der Suspension durch Zugabe von Na₂CO₃ erhöht und/oder der Suspension ein in dem Dispersionsmittel mindestens teilweise lösliches Salze zugegeben wird, das Fe enthält. Hierdurch erniedrigt sich der Schmelzpunkt der Asche bzw. Schlacke und die Schlacke kann sicher in flüssiger Form aus dem Vergasungsreaktor ausgeleitet werden.

In alternativer Ausgestaltung des erfindungsgemäßen Verfahrens wird in Verfahrensschritt (c) der Suspension ein in dem Dispersionsmittel mindestens teilweise lösliches Salz zugegeben, das mindestens ein Kation, ausgewählt aus der Gruppe umfassend Ca und Al enthält. Durch diese Maßnahme erhöht sich der Schmelzpunkt der Asche bzw. Schlacke und die Schlacke kann zuverlässig in fester Form mittels geeigneter Austragsvorrichtungen aus dem Vergasungsreaktor ausgeleitet werden.

In bevorzugter Ausgestaltung des erfindungsgemäßen Verfahrens werden die beim Behandeln der Suspension in Verfahrensschritt (c) gebildeten, festen Phosphatniederschläge gemeinsam mit der Suspension dem Vergasungsreaktor zugeführt. Hierdurch entfällt die aufwendige Trennung der Phosphatpartikel von dem Kohlenstoffträger. Der Verbleib der ausgefallenen Phosphate in dem Slurry gefährdet seine Verwendung als Einsatzstoff für den Vergasungsreaktor nicht, da der dadurch zusätzlich erzeugte Feststoffgehalt gering gegenüber dem Gesamtfeststoffgehalt im Slurry ist und die wesentlichen rheologischen und sonstigen Eigenschaften des Slurries sich hierdurch nur sehr gering verändern.

In weiterer bevorzugter Ausgestaltung des erfindungsgemäßen Verfahrens erfolgt bei kontinuierlicher Verfahrensführung das Behandeln der Suspension in Verfahrensschritt (c) in einem Behälter in der Weise, dass die hydrodynamische Verweilzeit T mindestens 2 min, bevorzugt mindestens 5 min, meist bevorzugt mindestens 10 min beträgt, wobei während der Verweilzeit im Behälter die Suspension durch Mischen, vorzugsweise durch Rühren, aufrecht erhalten wird. Die Erfahrung zeigt, dass bei Verwendung dieser Verweilzeiten ein sicheres Ausfällen der in der flüssigen Phase des Slurries gelösten Phosphate gelingt.

Das erfindungsgemäße Verfahren kann auch absatzweise durchgeführt werden. Hierzu werden Chargen des Slurries durch Erhöhen des pH-Wertes der Suspension und/oder Erhöhen der Konzentration an Metallkationen in der Suspension behandelt und nachfolgend als Vergasungsfeed eingesetzt.

Besonders günstig ist es, wenn der im Kohlenstoffträger enthaltene Phosphor mindestens teilweise in Form von Phosphorverbindungen vorliegt, die in dem Dispersionsmittel mindestens teilweise löslich sind. Je größer die Löslichkeit der Phosphorverbindungen in dem Dispersionsmittel, bevorzugt Wasser, ist, desto größer ist derjenige Phosphoranteil, der erfindungsgemäß vor dem Einleiten in den Vergasungsreaktor entfernt werden kann.

### Ausführungs- und Zahlenbeispiel

Weitere Merkmale, Vorteile und Anwendungsmöglichkeiten der Erfindung ergeben sich auch aus der nachfolgenden Beschreibung eines Ausführungs- und Zahlenbeispiels. Dabei bilden alle beschriebenen Merkmale für sich oder in beliebiger Kombination den Gegenstand der Erfindung, unabhängig von ihrer Zusammenfassung in den Ansprüchen oder deren Rückbeziehung.

### Beispiel

Anhand eines vereinfachten Beispiels wird das erfindungsmeldungsgemäße Vorgehen dargestellt. Zum besseren Verständnis wird hierbei ein modellhaft stark abstrahiertes Beispiel für die beiden erfindungsgemäßen Ausgestaltungen des Verfahrensschritts gemäß Anspruch 1. (c) dargestellt. Als Ausgangsbasis wurde dabei nur die flüssige Phase eines wässrigen Slurries betrachtet, der in Wasser gelöstes Calciumphosphat in leicht sauren Bereich enthält. Betrachtet wird im Folgenden das wässrige System, enthaltend 1000 g Wasser mit 5 g Calciumphosphat sowie weiteren Calciumionen in Form von 1 g CaCl₂ und einer Protonenquelle in Form von 0,1 g HCl.

Thermodynamische Berechnungen mit dem Berechnungsprogramm FactSage™ zeigten, dass bei der Erwärmung - wie im realen Fall auch beobachtet - noch freie Phosphationen in der Lösung vorliegen, die bei Temperaturerhöhung mit freien Calciumionen als Hydroxylapatit Ca₅(PO₄)₃(OH) ausfallen (Tabelle 1, Vergleichsbeispiel).

Um dieses Ausfällen bei Temperaturerhöhung zu verhindern, wurde erfindungsgemäß der pH-Wert durch Zugabe von 0,55 g NaOH angehoben. Dadurch wurde das Phosphat schon bei Raumtemperatur nahezu komplett ausgefällt und ein weiteres Ausfallen von Hydroxylapatit mit ansteigender Temperatur trat nicht weiter auf (Tabelle 2, Erfindung).

In alternativer Ausgestaltung wurde gebrannter Kalk (Calciumoxid, CaO) zugegeben. In Tabelle 3 ist die Auswirkung einer Zugabe von 0,38 g CaO dargestellt. Auch hierbei trat keine weitere Ausfällung von Hydroxylapatit mit steigender Temperatur auf (Tabelle 3, Erfindung).

### Gewerbliche Anwendbarkeit

Mit der Erfindung wird ein verbessertes Vergasungsverfahren zur Verfügung gestellt, mit dem auch Slurries, hergestellt aus, phosphorhaltigen Kohlenstoffträgern, insbesondere aus entsprechender Biomasse, als Einsatzstoffe für die Herstellung von Synthesegas genutzt werden können. Bei dem erfindungsgemäß verbesserten Vergasungsverfahren treten weniger häufig Betriebsunterbrechungen auf, die durch Verstopfungen von Leitungen, Apparaten und Düsen verursacht werden. Die Verfügbarkeit der Vergasungsanlage für den Produktionsbetrieb wird erhöht und somit die Wirtschaftlichkeit des Vergasungsverfahrens verbessert.

**Tabelle 1: Ausgefällte Mengen Hydroxylapatit und pH-Werte in Abhängigkeit von der Temperatur für das System 1000 g H₂O + 5 g Ca₃(PO₄)₂ + 0,1 g HCl + 1 g CaCl₂**

| **p (bar)** | **T (C)** | **Hydroxylapatit (s) (g)** | **pH** |
|---|---|---|---|
| 40 | 20 | 4,47 | 3,45 |
| 40 | 30 | 4,49 | 3,34 |
| 40 | 40 | 4,50 | 3,25 |
| 40 | 50 | 4,52 | 3,15 |
| 40 | 60 | 4,55 | 3,07 |
| 40 | 70 | 4,57 | 2,99 |
| 40 | 80 | 4,60 | 2,91 |
| 40 | 90 | 4,63 | 2,84 |
| 40 | 100 | 4,66 | 2,78 |
| 40 | 110 | 4,68 | 2,71 |
| 40 | 120 | 4,71 | 2,66 |
| 40 | 130 | 4,74 | 2,60 |
| 40 | 140 | 4,77 | 2,55 |
| 40 | 150 | 4,80 | 2,51 |
| 40 | 160 | 4,83 | 2,46 |
| 40 | 170 | 4,86 | 2,42 |
| 40 | 180 | 4,88 | 2,38 |
| 40 | 190 | 4,91 | 2,35 |
| 40 | 200 | 4,93 | 2,32 |
| 40 | 210 | 4,94 | 2,31 |
| 40 | 220 | 4,95 | 2,29 |
| 40 | 230 | 4,96 | 2,29 |
| 40 | 240 | 4,96 | 2,29 |
| 40 | 250 | 4,96 | 2,29 |

**Tabelle 2: Ausgefällte Mengen Hydroxylapatit und pH-Werte in Abhängigkeit von der Temperatur für das System 1000 g H₂O + 5 g Ca₃(PO₄)₂ + 0,1 g HCl + 1 g CaCl₂, Zugabe von 0,55 g NaOH**

| **p (bar)** | **T (C)** | **Hydroxylapatit (s) (g)** | **pH** |
|---|---|---|---|
| 40 | 20 | 5.40 | 10,59 |
| 40 | 30 | 5,40 | 10,26 |
| 40 | 40 | 5,40 | 9,97 |
| 40 | 50 | 5,40 | 9,70 |
| 40 | 60 | 5,40 | 9,46 |
| 40 | 70 | 5,40 | 9,23 |
| 40 | 80 | 5,40 | 9,03 |
| 40 | 90 | 5,40 | 8,85 |
| 40 | 100 | 5,40 | 8,69 |
| 40 | 110 | 5,40 | 8,54 |
| 40 | 120 | 5,40 | 8,40 |
| 40 | 130 | 5,40 | 8.28 |
| 40 | 140 | 5,40 | 8,17 |
| 40 | 150 | 5.40 | 8,07 |
| 40 | 160 | 5,40 | 7,98 |
| 40 | 170 | 5,40 | 7,91 |
| 40 | 180 | 5,40 | 7,84 |
| 40 | 190 | 5,40 | 7,78 |
| 40 | 200 | 5,40 | 7,72 |
| 40 | 210 | 5,40 | 7,68 |
| 40 | 220 | 5,40 | 7,64 |
| 40 | 230 | 5,40 | 7,61 |
| 40 | 240 | 5,40 | 7,59 |
| 40 | 250 | 5,40 | 7,57 |

**Tabelle 3: Ausgefällte Mengen Hydroxylapatit und pH-Werte in Abhängigkeit von der Temperatur für das System 1000 g H₂O + 5 g Ca₃(PO₄)₂ + 0,1 g HCl + 1 g CaCl₂, Zugabe von 0,38 g CaO**

| **p (bar)** | **T (C)** | **Hydroxylapatit (s) (g)** | **pH** |
|---|---|---|---|
| 40 | 20 | 5,40 | 9,98 |
| 40 | 30 | 5,40 | 9,65 |
| 40 | 40 | 5,40 | 9,35 |
| 40 | 50 | 5,40 | 9,08 |
| 40 | 60 | 5,40 | 8,84 |
| 40 | 70 | 5,40 | 8,62 |
| 40 | 80 | 5,40 | 8,42 |
| 40 | 90 | 5,40 | 8,24 |
| 40 | 100 | 5,40 | 8,07 |
| 40 | 110 | 5,40 | 7,92 |
| 40 | 120 | 5,40 | 7,79 |
| 40 | 130 | 5,40 | 7,67 |
| 40 | 140 | 5,40 | 7,56 |
| 40 | 150 | 5,40 | 7,46 |
| 40 | 160 | 5,40 | 7,37 |
| 40 | 170 | 5,40 | 7,29 |
| 40 | 180 | 5,40 | 7,22 |
| 40 | 190 | 5,40 | 7,16 |
| 40 | 200 | 5,40 | 7,11 |
| 40 | 210 | 5,40 | 7,06 |
| 40 | 220 | 5,40 | 7,03 |
| 40 | 230 | 5,40 | 7,00 |
| 40 | 240 | 5,40 | 6,97 |
| 40 | 250 | 5,40 | 6,95 |

## Patentansprüche

1. Verfahren zum Herstellen eines Wasserstoff und Kohlenoxide enthaltenden Synthesegases durch Vergasen eines Phosphor und Aschebildner enthaltenden Kohlenstoffträgers, insbesondere fester, phosphorhaltiger Biomasse, umfassend folgende Verfahrensschritte:
(a) Bereitstellen einer Suspension (Slurry), umfassend kohlenstoffhaltigen Feststoff in fein verteilter Form und ein flüssiges Dispersionsmittel,
(b) Behandeln der Suspension durch Erhöhen des pH-Wertes der Suspension und/oder Erhöhen der Konzentration an Metallkationen in der Suspension,
(c) Zuführen der behandelten Suspension zu einem Vergasungsreaktor und Umsetzen der behandelten Suspension im Vergasungsreaktor unter Vergasungsbedingungen mit mindestens einem Vergasungsmittel zu einem Wasserstoff und Kohlenoxide enthaltenden Synthesegas,
(d) Ausleiten des Synthesegases aus dem Vergasungsreaktor und optional Zuführen des Synthesegases zu weiteren Konditionierungs- und/oder Umsetzungsschritten,
(e) Ausleiten einer festen oder flüssigen Schlacke aus dem Vergasungsreaktor.

2. Verfahren nach Anspruch 1, **dadurch gekennzeichnet, dass** in Verfahrensschritt (c) der pH-Wert auf Werte von mindestens 7, bevorzugt mindestens 9, meist bevorzugt mindestens 10 erhöht wird.

3. Verfahren nach Anspruch 1, **dadurch gekennzeichnet, dass** in Verfahrensschritt (c) die Konzentration an Metallkationen in der Suspension dadurch erhöht wird, dass in dem Dispersionsmittel mindestens teilweise lösliche Salze zugegeben werden, die mindestens ein Kation, ausgewählt aus der Gruppe umfassend Ca, Al, Fe, enthalten.

4. Verfahren nach einem der vorigen Ansprüche, **dadurch gekennzeichnet, dass** das Dispersionsmittel wasserhaltig ist.

5. Verfahren nach einem der vorigen Ansprüche, **dadurch gekennzeichnet, dass** die behandelte Suspension vor dem Zuführen zum Vergasungsreaktor auf eine Temperatur von mindestens 20 °C, bevorzugt mindestens 60 °C, meist bevorzugt mindestens 120 °C vorgewärmt wird.

6. Verfahren nach einem der vorigen Ansprüche, **dadurch gekennzeichnet, dass** in Verfahrensschritt (c) der pH-Wert der Suspension durch Zugabe von Na₂CO₃ erhöht wird und/oder dass der Suspension ein in dem Dispersionsmittel mindestens teilweise lösliches Salze zugegeben wird, das Fe enthält, wenn die Schlacke in flüssiger Form aus dem Vergasungsreaktor ausgeleitet werden soll.

7. Verfahren nach einem der vorigen Ansprüche, **dadurch gekennzeichnet, dass** in Verfahrensschritt (c) der Suspension ein in dem Dispersionsmittel mindestens teilweise lösliches Salz zugegeben wird, das mindestens ein Kation, ausgewählt aus der Gruppe umfassend Ca und Al enthält, wenn die Schlacke in fester Form aus dem Vergasungsreaktor ausgeleitet werden soll.

8. Verfahren nach einem der vorigen Ansprüche, **dadurch gekennzeichnet, dass** die beim Behandeln der Suspension in Verfahrensschritt (c) gebildeten, festen Phosphatniederschläge gemeinsam mit der Suspension dem Vergasungsreaktor zugeführt werden.

9. Verfahren nach einem der vorigen Ansprüche, **dadurch gekennzeichnet, dass** bei kontinuierlicher Verfahrensführung das Behandeln der Suspension in Verfahrensschritt (c) in einem Behälter in der Weise erfolgt, dass die hydrodynamische Verweilzeit T mindestens 2 min, bevorzugt mindestens 5 min, meist bevorzugt mindestens 10 min beträgt, wobei während der Verweilzeit im Behälter die Suspension durch Mischen, vorzugsweise durch Rühren, aufrecht erhalten wird.

10. Verfahren nach einem der vorigen Ansprüche, **dadurch gekennzeichnet, dass** der im Kohlenstoffträger enthaltene Phosphor mindestens teilweise in Form von Phosphorverbindungen vorliegt, die in dem Dispersionsmittel mindestens teilweise löslich sind.
